# FASCICULE DE BREVET EUROPEEN

(11) **EP 1 958 183 B1**
(45) Date de publication et mention de la délivrance du brevet: **05.04.2017**
(21) Numéro de dépôt: 06830414.6
(22) Date de dépôt: 06.12.2006
(51) Int. Cl.: G09G 3/36

(54) **AFFICHEUR MATRICIEL SÉQUENTIEL COULEUR À CRISTAUX LIQUIDES**
SEQUENTIELLE FARBBELEUCHTUNGS-FLÜSSIGKRISTALL-MATRIXANZEIGE
COLOUR SEQUENTIAL LIQUID CRYSTAL MATRIX DISPLAY

(30) Priorité: 07.12.2005 FR 0512412
(43) Date de publication de la demande: 20.08.2008
(73) Titulaire: Thales, 92400 Courbevoie (FR)
(72) Inventeur: LEBRUN, Hugues, F-38500 Coublevie (FR); KRETZ, Thierry, F-38430 Saint Jean de Moirans (FR)
(74) Mandataire: Esselin, Sophie
(86) Numéro de dépôt international: PCT/EP2006/069369
(87) Numéro de publication internationale: WO 2007/065908

(56) Documents cités:
- EP-A- 0 478 186
- WO-A-2004/111985
- US-A1- 2003 218 591
- US-A1- 2004 140 985

## Description

La présente invention concerne un afficheur à cristaux liquides à matrice active, de type séquentiel couleur.

Un intérêt des afficheurs de type séquentiel couleur, est la possibilité de réaliser des systèmes d'affichage couleur pour des écrans vision directe sans filtres colorés, c'est-à-dire sans information de couleur attachée à un point d'image ou pixel. Chaque pixel est alors incolore et une boîte à lumière est utilisée qui permet successivement d'éclairer l'afficheur dans les trois couleurs primaires. L'invention s'applique particulièrement au marché des écrans vision directe : des écrans de téléphone cellulaire aux écrans de grandes dimensions pour la télévision.

L'invention s'intéresse plus particulièrement aux afficheurs dont les pixels sont commandés de façon analogique. Les niveaux unitaires de luminance appelés niveaux de gris, correspondant à un signal vidéo reçu sont réalisés en appliquant sur les colonnes des pixels, des niveaux de tension analogique correspondant, définis par une échelle de gris. Pour afficher un niveau de gris donné, l'élément actif d'un pixel est activé pendant une période ligne pour transférer le niveau de tension analogique correspondant sur la capacité du pixel. Le cristal liquide s'oriente alors dans une direction qui dépend de la valeur analogique appliquée. Une polarisation lumineuse entrante passant à travers ce cristal liquide est alors modifiée et analysée par un polariseur.

La performance de l'afficheur dépend notamment de la brillance. Celle-ci est fonction du temps d'illumination du pixel. Ce temps d'illumination dépend du temps d'adressage nécessaire, pour transférer les niveaux de tension analogique sur chacun des pixels d'une ligne de la matrice, et du temps de stabilisation du cristal liquide, qui est fonction du niveau de tension analogique précédent, et du niveau de tension analogique courant.

Ces contraintes sont accentuées s'agissant d'un afficheur adressé en mode séquentiel couleur. En effet, chaque trame comprend plusieurs sous-trames colorées, une par couleur primaire. On a ainsi généralement trois sous-trames colorées par trame. Dans le temps d'une trame, il faut ainsi adresser au moins trois fois tous les pixels de la matrice pour afficher l'information vidéo correspondant à chaque couleur primaire.

Dans certains afficheurs à cristaux liquides du type séquentiel couleur, la fréquence d'affichage des couleurs est augmentée pour résoudre le problème bien connu de rupture des couleurs (*color break-up),* dû notamment au temps de stabilisation du cristal liquide. On a ainsi par exemple deux sous-trames colorées par couleur primaire, dans chaque trame vidéo. Or la limite supérieure du temps d'adressage de l'afficheur est fixée par la durée de la trame vidéo. Si on double la fréquence vidéo, cela revient à diviser par deux la durée de la trame vidéo ce qui n'est pas sans poser de problème. Notamment les pixels des dernières lignes du panneau peuvent ne pas avoir assez de temps pour atteindre leur nouvelle consigne de niveau vidéo. Si la précédente phase d'adressage correspondait à une sous-trame rouge, dans la sous-trame nouvelle, par exemple la sous-trame verte, il peut rester dans le bas du panneau des données correspondant à la sous-trame rouge précédente.

Dans ces différents afficheurs, le temps de réponse du cristal liquide est très contraignant. Ce temps de réponse est fonction du niveau de tension analogique mémorisé pendant la sous-trame précédente et du niveau de tension analogique à charger pendant la nouvelle sous-trame. En effet, dans ce cas on balaye très vite les lignes. Par exemple on dispose de 3 millisecondes par sous-trame colorée pour balayer toutes les lignes. Or le temps de commutation du cristal liquide est de l'ordre de 1 milliseconde. La première ligne adressée dans la sous-trame dispose ainsi en pratique de 1 à 2 millisecondes pour commuter du niveau vidéo de la sous-trame précédente, au niveau vidéo de la sous-trame courante, tandis que la dernière ligne dispose à peine de 1 milliseconde. Selon le niveau vidéo précédent et le niveau courant, les temps de basculement varient et le temps disponible pour les pixels des dernières lignes de la trame peut être insuffisant pour permettre à ces pixels de converger vers leur nouvel objectif.

Si on prend l'exemple d'un afficheur à cristaux liquides du type TN (*Twisted Nematic*), le temps de basculement du cristal liquide d'un niveau de gris à un autre niveau de gris est bien supérieur au temps de basculement du niveau noir au niveau blanc, ou du niveau blanc à un niveau de gris. Le niveau noir est le mode du cristal liquide dans lequel la différence de potentiel entre le pixel et la contre-électrode est le maximum. Le niveau blanc est le mode du cristal liquide dans lequel la différence de potentiel entre le pixel et la contre-électrode est le minimum. Les gris clairs correspondent à une différence de potentiel appliquée proche de celle appliquée pour obtenir du blanc. Les gris foncés correspondent à une différence de potentiel proche de celle appliquée pour obtenir du noir. Le temps de basculement du niveau blanc à un niveau gris clair peut être une fois et demie supérieure au temps de basculement du niveau noir à ce même niveau de gris clair. Le temps de basculement d'un niveau de gris au niveau noir est lui très court. Dans un exemple, avec des cristaux liquides du type TN, on a pu mesurer les temps de basculement suivants : 0.2 milliseconde, pour basculer du blanc au noir; 1 milliseconde, pour basculer du noir au blanc; 3.25 millisecondes, dans le pire cas mesuré entre deux niveaux de gris.

US2004/140985 décrit une technique dite d'overdrive qui permet dans certains cas d'appliquer sur un pixel via le conducteur colonne du pixel, une tension analogique déterminée pour obtenir un basculement plus rapide du cristal liquide. Le choix est déterminé pour chaque pixel par la comparaison entre la donnée précédemment affichée et la nouvelle.

WO2004/111985 décrit pour un afficheur LCD de type séquentiel couleur, une segmentation de l'écran en bandes, permettant de commander l'affichage en parallèle sur les trois bandes, chacune éclairée suivant une séquence des couleurs distincte.

Dans l'invention, on cherche à améliorer les performances d'un afficheur à cristaux liquides, notamment permettre d'utiliser plusieurs sous-trames colorées par couleur primaire dans chaque trame vidéo, de manière à réduire l'effet stroboscopique dû à la fréquence d'allumage et d'extinction de la boîte à lumière, tout en ayant une bonne qualité d'image.

Une solution technique à la base de l'invention consiste à réaliser les niveaux de gris avec une tension analogique qui évolue de façon monotone suivant la ligne associée du pixel et ou une couleur à afficher.

L'invention concerne donc un système vidéo selon la revendication 1 comprenant un afficheur séquentiel couleur à cristal liquide avec un panneau de pixels arrangés en lignes et colonnes, comprenant des moyens pour commander sur chaque pixel du panneau des niveaux unitaires de luminance appelés niveaux de gris, chaque niveau de gris correspondant à une information vidéo reçue en entrée, caractérisé en ce que le niveau de gris commandé sur un pixel est réalisé avec une tension analogique qui évolue de façon monotone suivant la ligne associée du pixel et ou une couleur à afficher.

D'autres avantages et caractéristiques de l'invention sont détaillés dans la description suivante en référence aux dessins illustrés d'un mode de réalisation de l'invention, donné à titre d'exemple non limitatif. Dans ces dessins :
- la figure 1 illustre un panneau d'affichage LCD selon l'état de l'art;
- la figure 2 est un schéma-bloc d'un dispositif de commande des colonnes du panneau selon l'état de l'art;
- la figure 3 illustre schématiquement un circuit de référence de tension permettant de varier l'échelle de gris en fonction de la couleur à afficher et/ou de la ligne courante sélectionnée;
- la figure 4 illustre un effet de dégradé de luminance tel qu'on peut le mesurer avec un afficheur de l'état de l'art; et
- la figure 5 illustre la compensation de cet effet obtenu selon l'invention.

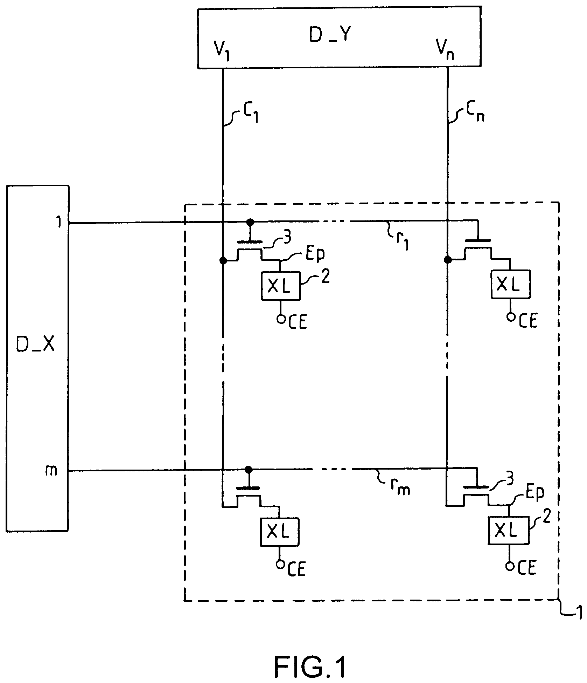

Sur la figure 1 est illustré un schéma-bloc d'un afficheur LCD, avec un panneau 1 à matrice active. Il comprend un premier substrat supportant les transistors et les électrodes pixel, un deuxième substrat comportant ou non des filtres colorés et une contre-électrode CE commune à tous les pixels du panneau, posée ou non sur les filtres colorés. Les deux substrats sont sensiblement parallèles et espacés l'un de d'autre, avec du cristal liquide dans l'espace entre les deux substrats entre la contre-électrode et la matrice active. Le panneau consiste en m lignes r₁ à rₘ comprenant chacune n éléments d'affichage ou pixels 2, et n colonnes c₁ à cₙ avec m pixels 2 dans chaque colonne. Chaque pixel a un élément actif associé, dans l'exemple, un transistor 3. De manière habituelle, les électrodes de grille des transistors dans une même ligne sont reliées en commun au conducteur de ligne r₁,...rₘ et les électrodes conductrices de source ou de drain des transistors dans une même colonne sont reliées en commun au conducteur de colonne c₁,...cₙ, l'autre électrode étant reliée à une électrode pixel Ep du pixel 2 associé.

Une phase d'adressage d'un tel afficheur comprend habituellement une étape d'écriture, pendant laquelle les lignes sont sélectionnées séquentiellement, et les éléments actifs de chaque ligne sélectionnée sont activés pour recevoir et transférer sur la capacité pixel associée le niveau de tension analogique, avec un temps de stabilisation, qui correspond au temps de basculement nécessaire pour que tous les pixels aient commutés; et une étape d'éclairage, pendant lequel le panneau est éclairé, la lumière modulée par l'afficheur et l'image correspondante récupérée. Dans le cas d'un mode séquentiel couleur, ces étapes sont réalisées au moins une fois pour chaque couleur primaire, au sein d'une même trame vidéo.

L'étape d'écriture consiste pour chacune des lignes du panneau 1 à appliquer une tension de grille sur le conducteur de ligne associé, pendant un temps d'adressage ligne tₗ (ou temps ligne). Ceci a pour effet de mettre à l'état ON (passant) tous les transistors 3 de cette ligne, et de commuter sur les électrodes pixel Ep les tensions appliquées sur les colonnes correspondant à l'information vidéo à afficher. Cet adressage est contrôlé par des circuits de commande appelés driver ligne D-X pour la sélection des lignes, et driver colonne D-Y, pour commander les niveaux de gris sur les pixels. Ces drivers peuvent être intégrés à l'afficheur ou externes. A chaque phase d'adressage, les lignes sont ainsi adressées chacune pendant un temps ligne, en sorte de réaliser un balayage de toutes les lignes du panneau d'affichage. L'adressage se fait habituellement en séquence, ligne après ligne. D'autres modes d'adressage des lignes sont possibles. Notamment les lignes d'un panneau peuvent être réparties en différents groupes, en sorte qu'il soit possible d'adresser en écriture plusieurs lignes simultanément. Dans le cas d'un afficheur séquentiel couleur on a une phase d'adressage par sous-trame colorée d'une trame vidéo.

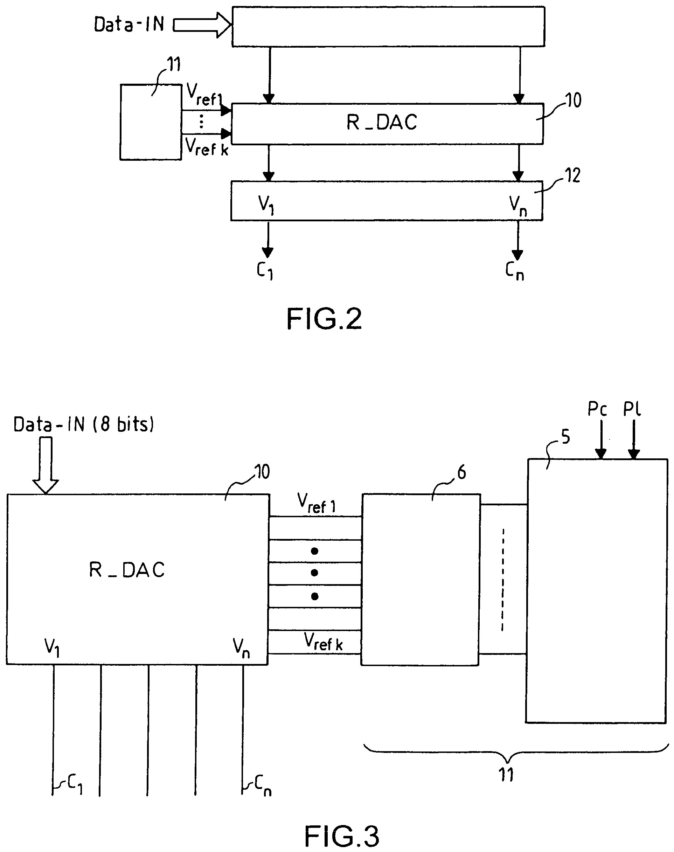

Les niveaux de gris sont commandés sur les pixels d'une ligne sélectionnée en appliquant sur les colonnes un ensemble de niveaux de tension analogique V₁ à Vₙ, un par colonne c₁ à cₙ, correspondant aux informations vidéos appliquées en entrée (DataIN), et définis en fonction d'une échelle de gris déterminée pour l'afficheur. Dans l'exemple illustré sur la figure 2, cet ensemble de niveaux de tension analogique V₁ à Vₙ est fourni par un convertisseur numérique analogique 10. Suivant un exemple d'architecture connue, ce convertisseur est de type R-DAC, c'est à dire qu'il utilise un circuit de référence de tension 11, qui fournit k niveaux de tension analogique de référence V_{ref1} à V_{refk}, et une chaîne de résistances en série qui établit des ponts diviseurs résistifs à l étages entre chaque niveau de référence V_{ref1} à V_{refk}, pour fournir les niveaux de tension analogique V₁ à Vₙ. Le convertisseur 10 établit ainsi une bijection entre chaque code numérique reçu en entrée et un niveau de tension analogique V1 à Vn. Le nombre de niveaux de gris du panneau est égal à (k-1).l ou (k-1).l/2 suivant le mode d'adressage choisi. Pour chaque série de données vidéo du flux entrant DataIN correspondant à une ligne de l'afficheur, le convertisseur 10 fournit ainsi en sortie un ensemble de n niveaux de tension analogiques V₁ à Vₙ, via un dispositif amplificateur 12, niveaux qui sont appliqués sur les colonnes c₁ à cₙ. Généralement, la polarité des tensions V₁,...Vₙ à appliquer sur les colonnes est inversée à chaque phase d'adressage: on a ainsi une alternance de trames (ou sous-trames) positives et négatives. Ceci permet d'obtenir une tension moyenne nulle sur le cristal liquide et évite le marquage des panneaux.

Dans l'invention, et comme illustré sur la figure 3, l'afficheur comprend un circuit 11 apte à générer un ensemble de tensions analogiques de référence V_{ref1}, V_{refk} définissant une échelle de niveaux de gris donnée fonction d'une ligne courante sélectionnée et/ou d'une couleur à afficher. L'échelle de gris ainsi sélectionnée fournit pour chacune des informations vidéo reçues pour les pixels d'une ligne courante sélectionnée, un niveau de tension analogique V₁, ...Vₙ correspondant à appliquer sur ces pixels via leur colonne associée c₁, ...cₙ. Le circuit de génération 11 permet donc de générer une pluralité d'ensembles de valeurs de tension analogique de référence V_{ref1}, ...V_{refk}, chaque ensemble codant une échelle de gris différente, déterminée en fonction de la position de la ligne dans le panneau ou de la couleur concernée. A tout moment, on utilise ainsi une échelle de niveau de gris optimisée en fonction de ces paramètres de position de ligne, et de couleur. On note PI un paramètre de sélection correspondant à la position de la ligne sélectionnée en écriture et Pc un paramètre correspondant à la couleur d'affichage courante.

Dans un exemple de réalisation illustré sur la figure 3, le circuit 11 de génération selon l'invention comprend un dispositif 5 de mémorisation d'ensembles de valeurs numériques, chaque ensemble codant une échelle de gris optimisée en fonction de la position de la ligne courante sélectionnée et ou de la couleur à afficher. Le dispositif 5 peut par exemple être une mémoire de type RAM. Il est associé à un circuit 6 de k convertisseurs numérique vers analogique pour fournir en sortie les valeurs analogiques de référence Vref₁ à Vrefₖ correspondant à l'ensemble de valeurs numériques sélectionné dans le circuit 5 et appliqué en entrée du circuit 6 de conversion numérique vers analogique. Les circuits 10 et 11 sont synchronisés pour qu'à chaque changement des conditions sur les paramètres Pc et/ou Pl, on ait en entrée du circuit 10, un set de référence Vref₁ à Vrefₖ correspondant à ces nouvelles conditions.

Dans une première mise en oeuvre de l'invention, la sélection d'une échelle de gris applicable est fonction de la position de la ligne sélectionnée courante. Cette mise en oeuvre est applicable à tout type d'afficheur à cristaux liquides, par exemple à des afficheurs qui ne comportent qu'une seule phase d'adressage par trame vidéo, avec un éclairage en lumière blanche dynamique, sur un panneau dont la structure est avec ou sans filtres colorés. Dans cette première mise en oeuvre, on prévoit de modifier le set des valeurs de référence V_{ref1} à V_{refk} en fonction de la position de la ligne sélectionnée dans la phase d'adressage courante. Si on reprend la figure 3, le dispositif 5 de mémorisation contient une pluralité d'ensembles de valeurs numériques, en fonction de la valeur du paramètre PI. La valeur prise par le paramètre PI sert de pointeur sur un ensemble de valeurs numériques correspondant, qui est alors appliqué en entrée du circuit 6 des convertisseurs numérique vers analogique qui fournissent les tensions analogiques V_{ref1} à V_{refk}. Ainsi, à un changement de ligne(s) sélectionnée(s) en écriture, on peut faire correspondre un nouvel ensemble de tensions analogiques de référence Vref₁ à Vrefₖ. En pratique, la valeur du paramètre PI peut être dérivée des signaux d'adressage des lignes. Si on prévoit de faire correspondre une échelle de gris particulière à chaque ligne différente du panneau, le paramètre PI peut être par exemple obtenu d'un circuit numérique qui détecte une transition sur les signaux d'adressage des lignes, fournis en sortie du circuit de commande des lignes D-X (figure 1). On peut prévoir de faire correspondre une même échelle de gris particulière à plusieurs lignes du panneau. Un circuit de détection des conditions correspondantes apte à fournir en sortie la valeur du paramètre PI comprendra des fonctions logiques apte à détecter les conditions correspondantes à partir des signaux d'adressage des lignes. Un tel circuit de détection de conditions sur des signaux d'adressage ne pose pas de problème de réalisation pratique.

Le nombre d'échelles de gris dont on souhaite disposer est déterminé notamment en fonction du type de panneau et de ses caractéristiques, du nombre de lignes adressées simultanément en écriture, de la qualité d'affichage recherchée.

A chaque fois que le paramètre PI change, on charge un nouvel ensemble de niveaux de tension analogique de référence V_{ref1},...V_{refk} correspondant. Cet ensemble est utilisé pour l'étape d'écriture courante, et les étapes d'écriture suivantes, jusqu'à ce que le paramètre PI change. Il pointe alors sur un nouvel ensemble de valeurs numériques dans le dispositif 5, et un nouvel ensemble correspondant de niveaux de tension analogique de référence V_{ref1},...V_{refk} est obtenu. Par ce moyen, on module les niveaux de tension analogiques V₁ à Vₙ appliqués sur les colonnes en fonction de la position des pixels.

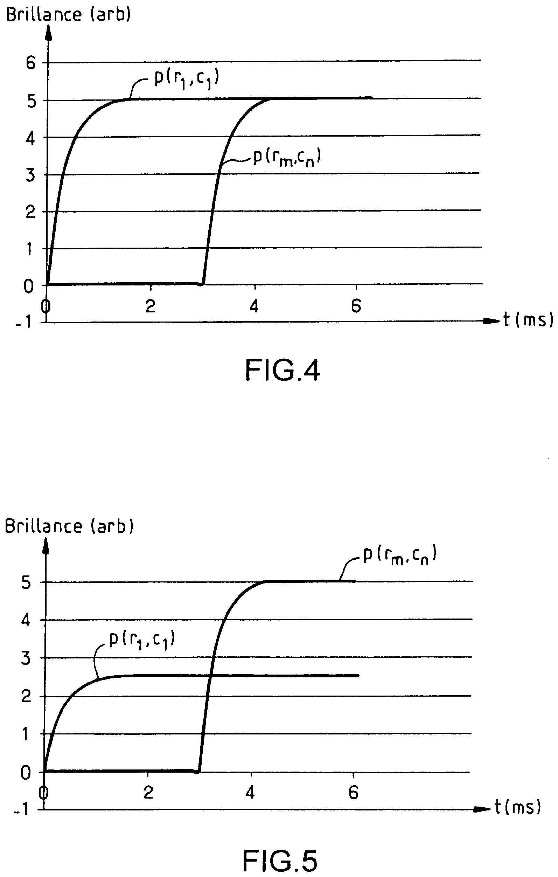

Les figures 4 et 5 illustrent des courbes de brillance obtenues au cours d'une phase d'adressage, en fonction de la position des pixels dans le panneau, la première, avec un afficheur selon l'état de l'art, avec une unique échelle de gris définie pour le panneau, et la deuxième, avec un afficheur selon l'invention, utilisant une pluralité d'échelles de gris, en fonction de la position de la ligne du pixel. La figure 4 montre une grande disparité des brillances entre le premier pixel p(r₁, c₁), première ligne r₁ et première colonne c₁, et le dernier pixel p(rₘ, cₙ), dernière ligne rₘ et dernière colonne cₙ. Figure 5, l'aire sous la courbe devient comparable pour les deux pixels.

Dans une deuxième mise en oeuvre de l'invention, l'échelle de gris applicable est fonction de la couleur à afficher. Elle est applicable à un afficheur séquentiel couleur. La valeur du paramètre de sélection Pc est définie par la couleur de la sous-trame colorée correspondant à la phase d'adressage courante. Cette information de couleur peut être obtenue typiquement des signaux de commande de la boîte à lumière. L'ensemble des valeurs analogiques de référence Vref₁ à Vrefₖ appliqué peut alors être modifié à chaque changement de couleur, c'est à dire à chaque nouvelle phase d'adressage. Cela revient à moduler les niveaux de tension analogiques V₁ à Vₙ appliqués sur les colonnes en fonction de la couleur de la sous-trame. En d'autres termes, on prévoit une échelle de niveaux de gris par couleur. L'échelle de niveaux de gris est habituellement calibrée pour chaque panneau de manière à intégrer une compensation dite gamma (ou courbe en S) pour améliorer les performances d'affichage de l'afficheur. Selon l'invention, l'échelle de gris peut ainsi intégrer une compensation gamma optimisée pour la couleur correspondante. En pratique, on modifie les valeurs de tension analogique de référence Vref₁ à Vrefₖ au début de chaque nouvelle phase d'adressage, en fonction de la couleur de la phase d'adressage correspondante.

Si on reprend la figure 3, la valeur du paramètre Pc, qui correspond à la couleur d'éclairage de la phase d'adressage courante, permet de pointer en mémoire 5 sur un ensemble déterminé de valeurs numériques, qui est alors appliqué en entrée du circuit 6 de conversion qui fournit en sortie l'ensemble des tensions analogiques de référence V_{ref1} à V_{refk} correspondant. En pratique, le dispositif 5 de mémorisation mémorise trois ensembles de valeurs numériques définissant chacun une échelle de gris particulière, un ensemble par couleur primaire. Chaque ensemble est déterminé spécifiquement pour la couleur primaire associée, pour l'afficheur considéré, de manière à bénéficier d'une courbe de correction gamma optimale dans chacune des couleurs.

On peut bien sûr combiner les différents paramètres de détermination de l'échelle de gris applicable, selon la couleur et selon la ligne. Un ensemble mémorisé dans le dispositif est alors sélectionné en fonction d'une combinaison des deux pointeurs Pc et PI.

L'invention qui vient d'être décrite est applicable à tout afficheur dont on veut améliorer la luminance ou la consommation d'énergie à luminance constante. Elle s'applique aussi bien à des afficheurs utilisant un mode d'adressage dans lequel les m lignes du panneau sont sélectionnées chacune l'une après l'autre, ou dans lequel plusieurs lignes peuvent être sélectionnées à la fois. Ceci est notamment possible dans un afficheur matriciel à affichage séquentiel des couleurs, du type à matrice active, dont les lignes sont réparties en p groupes et dans lequel chaque colonne de pixel comprend p conducteurs colonnes permettant une sélection en écriture des pixels de p lignes en parallèle, une ligne par groupe. Chaque groupe peut par exemple comprendre m/p lignes successives du panneau, en sorte que l'afficheur est organisé en p bandes de m/p lignes. Ou bien les lignes sélectionnées simultanément peuvent utiliser la même échelle de gris, ou bien on prévoit alors de faire correspondre à chacune de ces lignes sélectionnées en même temps, une échelle de gris différente. Ceci ne pose pas de problème de réalisation particulier, puisque lorsque p lignes sont sélectionnées en même temps, on a p drivers colonnes en parallèle, en sorte que l'on peut appliquer un ensemble de valeurs de tension analogique de référence différent sur chacun des p drivers colonne.

## Revendications

1. Système vidéo comprenant un afficheur séquentiel couleur à cristal liquide avec un panneau (1) de pixels (2) arrangés en lignes et colonnes, comprenant des moyens pour commander sur chaque pixel du panneau des niveaux unitaires de luminance appelés niveaux de gris, chaque niveau de gris correspondant à une information vidéo (DataIN) reçue en entrée, **caractérisé en ce qu'**il comprend un circuit de génération (11) d'un ensemble de tensions analogiques de référence définissant une échelle de gris donnée fonction d'un paramètre de sélection (PI) correspondant à la position de la ligne sélectionnée en écriture et/ou d'un paramètre (Pc) correspondant à la couleur à afficher, ladite échelle ainsi sélectionnée fournissant pour chacune des informations vidéo reçues pour les pixels d'une ligne courante sélectionnée, un niveau de tension analogique (V₁, ...Vₙ) correspondant à appliquer sur lesdits pixels via leur colonne associée.

2. Système vidéo selon la revendication 1, **caractérisé en ce qu'**il comprend en outre un dispositif de mémorisation (5) d'ensembles de valeurs numériques, chaque ensemble codant une échelle de gris déterminée, et un circuit (6) de convertisseurs numérique vers analogique, ledit circuit (6) de convertisseurs recevant en entrée un ensemble parmi la pluralité d'ensembles de valeurs numériques mémorisés, sélectionné en fonction de la ligne courante sélectionnée ou de la couleur à afficher et fournissant en sortie un ensemble correspondant de valeurs de tension analogique de référence (V_{ref1}, V_{refk}).

3. Système vidéo selon la revendication 1 ou 2, **caractérisé en ce que** ledit circuit de génération (11) fournit un ensemble de tensions analogiques de référence (V_{ref1}, ...V_{refk}) différent pour chaque ligne du panneau.

4. Système vidéo selon la revendication 1 ou 2, **caractérisé en ce que** ledit circuit de génération (11) fournit un même ensemble de tensions analogiques de référence (V_{ref1}, ...V_{refk}) pour une pluralité de lignes de positions déterminées dans le panneau.

## Patentansprüche

1. Videosystem, das eine sequentielle Flüssigkristallfarbanzeige mit einer Platte (1) von in Reihen und Spalten angeordneten Pixeln (2) umfasst, umfassend Mittel, um auf jedem Pixel der Platte einheitliche Luminanzniveaus, Grauniveaus genannt, zu regeln, wobei jedes Grauniveau einer am Eingang empfangenen Videoinformation (DataIN) entspricht, **dadurch gekennzeichnet, dass** es eine Schaltung (11) zum Erzeugen eines Satzes von analogen Referenzspannungen umfasst, der eine gegebene Grauskala in Abhängigkeit von einem der schreib-gewählten Reihe entsprechenden Auswahlparameter (PI) und/oder von einem der anzuzeigenden Farbe entsprechenden Parameter (Pc) definiert, wobei die so gewählte Skala für jede der empfangenen Videoinformationen für die Pixel einer gewählten laufenden Reihe einen entsprechenden analogen Spannungspegel (V₁, ... Vₙ) liefert, der an die Pixel über deren assoziierte Spalte anzulegen ist.

2. Videosystem nach Anspruch 1, **dadurch gekennzeichnet, dass** es ferner eine Vorrichtung (5) zum Speichern von Sätzen von digitalen Werten, wobei jeder Satz eine bestimmte Grauskala codiert, und eine Schaltung (6) von Digital-Analog-Wandlern umfasst, wobei die Wandlerschaltung (6) am Eingang einen Satz aus den mehreren Sätzen von gespeicherten digitalen Werten empfängt, gewählt in Abhängigkeit von der gewählten laufenden Reihe oder der anzuzeigenden Farbe, und am Ausgang einen entsprechenden Satz von analogen Referenzspannungswerten (V_{ref1}, V_{refk}) liefert.

3. Videosystem nach Anspruch 1 oder 2, **dadurch gekennzeichnet, dass** die Erzeugungsschaltung (11) einen Satz von analogen Referenzspannungen (V_{ref1}, ...V_{refk}) liefert, die sich für jede Reihe der Platte unterscheiden.

4. Videosystem nach Anspruch 1 oder 2, **dadurch gekennzeichnet, dass** die Erzeugungsschaltung (11) einen selben Satz von analogen Referenzspannungen (V_{ref1}, ... V_{refk}) für eine Mehrzahl von Reihen von bestimmten Positionen in der Platte liefert.

## Claims

1. A video system comprising a sequential colour liquid crystal display with a panel (1) of pixels (2) arranged in rows and columns, comprising means for controlling unit levels of luminance, called grey levels, on each pixel in the panel, each grey level corresponding to a piece of video information (DataIN) received at an input, **characterised in that** it comprises a circuit (11) for generating a set of reference analogue voltages defining a given scale of grey as a function of a selection parameter (PI) corresponding to the position of the row selected by writing and/or by a parameter (Pc) corresponding to the colour to be displayed, said scale thus selected providing for each piece of video information received for the pixels of a current row selected a corresponding analogue voltage level (V₁, ...Vₙ) to be applied to said pixels via their associated column.

2. The video system according to Claim 1, **characterised in that** it further comprises a device (5) that memorizes sets of digital values, each set coding a determined grey scale, and a circuit (6) of digital to analogue converters, said circuit (6) of converters receiving one set from the plurality of memorized sets of digital values at the input, selected as a function of the current selected row or of the colour to be displayed, and outputting a corresponding set of reference analogue voltage values (V_{ref1}, V_{refk}).

3. The video system according to Claim 1 or 2, **characterised in that** said generation circuit (11) provides a set of reference analogue voltages (V_{ref1}, ...V_{refk}) different for each row of the panel.

4. The video system according to Claim 1 or 2, **characterised in that** said generation circuit (11) provides the same set of analogue reference voltages (V_{ref1}, ...V_{refk}) for a plurality of rows of determined positions in the panel.
